# FASCICULE DE BREVET EUROPEEN

(11) **EP 0 699 150 B1**
(45) Date de publication et mention de la délivrance du brevet: **16.08.2000**
(21) Numéro de dépôt: 94917052.6
(22) Date de dépôt: 25.05.1994
(51) Int. Cl.: B62D 1/26

(54) **ENSEMBLE DE GUIDAGE DIRECTIONNEL D'UN VEHICULE ROUTIER LE LONG D'UN RAIL**
LEITEINRICHTUNG FÜR EIN SCHIENENGEFÜHRTES FAHRZEUG
UNIT FOR DIRECTIONALLY GUIDING A TRANSPORT VEHICLE ALONG A RAIL

(30) Priorité: 26.05.1993 FR 9306491
(43) Date de publication de la demande: 06.03.1996
(73) Titulaire: LOHR INDUSTRIE, 67980 Hangenbieten (FR)
(72) Inventeur: LOHR, Robert, F-67980 Hangenbieten (FR)
(74) Mandataire: Metz, Paul
(86) Numéro de dépôt international: FR9400612
(87) Numéro de publication internationale: WO9427854

(56) Documents cités:
- DE-A- 1 455 512
- DE-A- 2 356 207
- DE-B- 1 128 765
- DE-B- 1 161 157
- FR-A- 513 374
- FR-A- 514 718

## Description

L'invention se rapporte à un ensemble d'autoguidage directionnel d'un véhicule routier le long d'un rails, tel que défini dans le préambule de la revendication 1 et connu par exemple de DE-A-1455512.

On recherche actuellement en milieu urbain à diminuer économiquement l'emprise au sol des moyens collectifs de transport.

A cet effet, on a imaginé des dispositifs permettant de guider les véhicules urbains de transport en commun, sur la totalité de leur trajet, ou du moins sur une partie de celui-ci.

Ces dispositifs apportent la garantie de pouvoir diminuer la largeur des voies ou couloirs réservés à la circulation de ces véhicules.

Par ailleurs, le conducteur du véhicule est constamment et totalement occupé par la conduite, ce qui entraîne une fatigue croissante et excessive jusqu'à l'abrutissement et par conséquent une augmentation du risque d'accidents.

Un guidage du véhicule au moins sur une partie du trajet permet de confier au conducteur une tâche de surveillance et de contrôle, moins fatiguante, plus valorisante et plus fonctionnelle pour le service.

De façon générale, un choix se présente entre les systèmes de guidage électroniques et les systèmes mécaniques.

Les systèmes mécaniques sont souvent préférés car ils offrent divers avantages, en raison notamment de leur simplicité, de leur fiabilité et finalement de leur coût.

Les dispositifs de guidage mécaniques existant actuellement présentent cependant de nombreuses insuffisances, qui nuisent à leur développement.

Notamment, ces dispositifs ne sont pas conçus pour être installés sur des véhicules à trains avant à roues indépendantes. Or, l'emploi d'un essieu rigide est impossible dans le cas de véhicules à plancher surbaissé, alors que cette particularité correspond à une demande importante de la part des communautés urbaines pour des raisons de facilité d'accès et de sécurité.

Egalement, les dispositifs actuels ne présentent pas de protection contre le déraillement.

Par exemple, on connaît selon le brevet européen EP-A-0 062 370 au nom des Constructions FERROVIAIRES et METALLIQUES un ensemble d'autoguidage de véhicule comprenant deux bras portant chacun un galet. Ce système est adapté à un rail creux et nécessite une direction totalement spécifique. Ses deux bras de guidage associés, montés en direct sur la direction rendent difficile une conduite souple et sans à-coups.

Un autre exemple de réalisation est décrit dans le brevet européen EP-A-0 496 236 au nom de ADIGAN Research. Un bras de guidage portant un organe coulissant est monté sous un véhicule, et s'adapte dans un rail creux prévu dans la chaussée.

Le dispositif ne comporte pas de galet tournant, il est donc à craindre des crissements et sifflements parasites. D'autre part, il n'est pas protégé contre les déraillements. Ce dispositif est soumis à une usure rapide entraînant des imprécisions et des dérèglements du guidage.

Le but de l'invention est de remédier à ces inconvénients en proposant un ensemble d'autoguidage directionnel d'un véhicule routier le long d'un rail profilé, pouvant être activé de façon permanente ou provisoire.

Selon l'invention, ce but est atteint par un ensemble d'autoguidage directionnel comportant les caractéristiques définies dans la revendication 1.

L'ensemble d'autoguidage selon l'invention présente de nombreux avantages :
. les galets inclinés évitent tout déraillement inopiné. L'inclinaison des galets favorise les opérations de guidage en entrée de site par la possibilité d'utiliser les faces extérieures desdits galets ;
. les galets sont faiblement chargés d'où une diminution de l'usure et montés sur moyeux élastiques pour réduire les bruits ;
. l'ensemble homogène de direction/guidage est compatible avec l'utilisation d'un train avant à roues indépendantes et permet d'utiliser les capacités naturelles du boîtier de direction à assistance hydraulique à filtrer des vibrations provenant des roues ;
. le dispositif de gestion et de sécurité du système est assuré par un automate et permet la mise en place d'un système dit "homme mort" ;
. le rail faiblement chargé peut être de ce fait fixé au sol par l'intermédiaire d'un intercalaire élastique ou stratifié abaissant le niveau sonore.

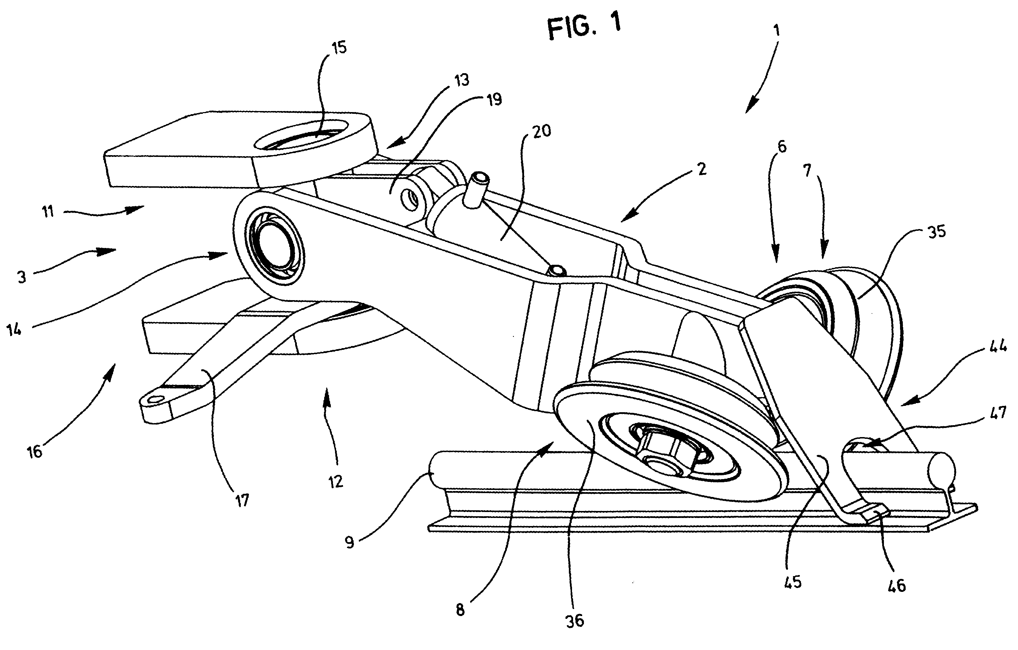

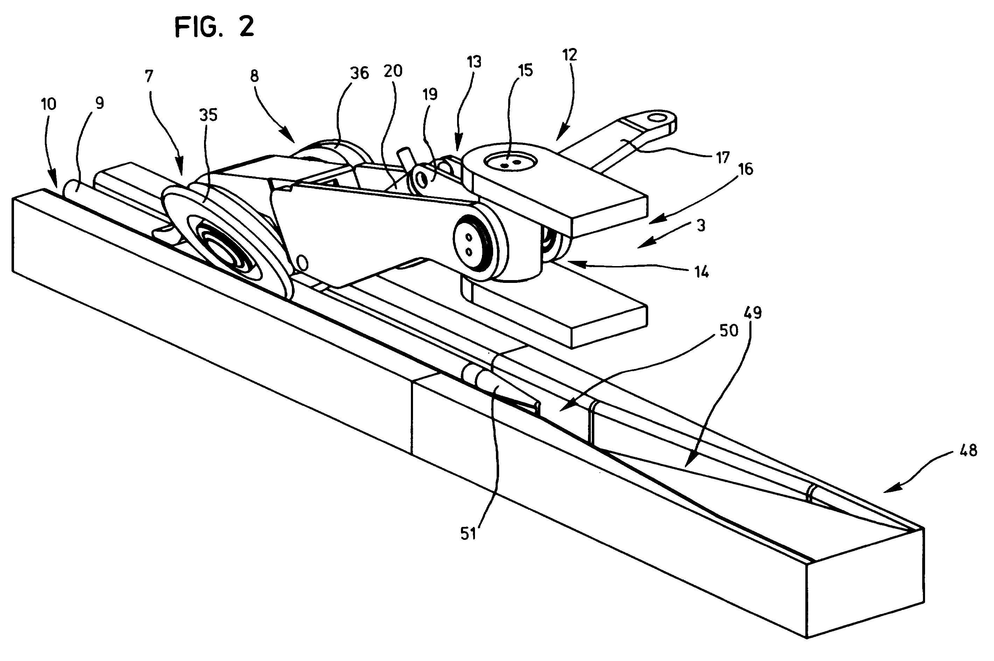

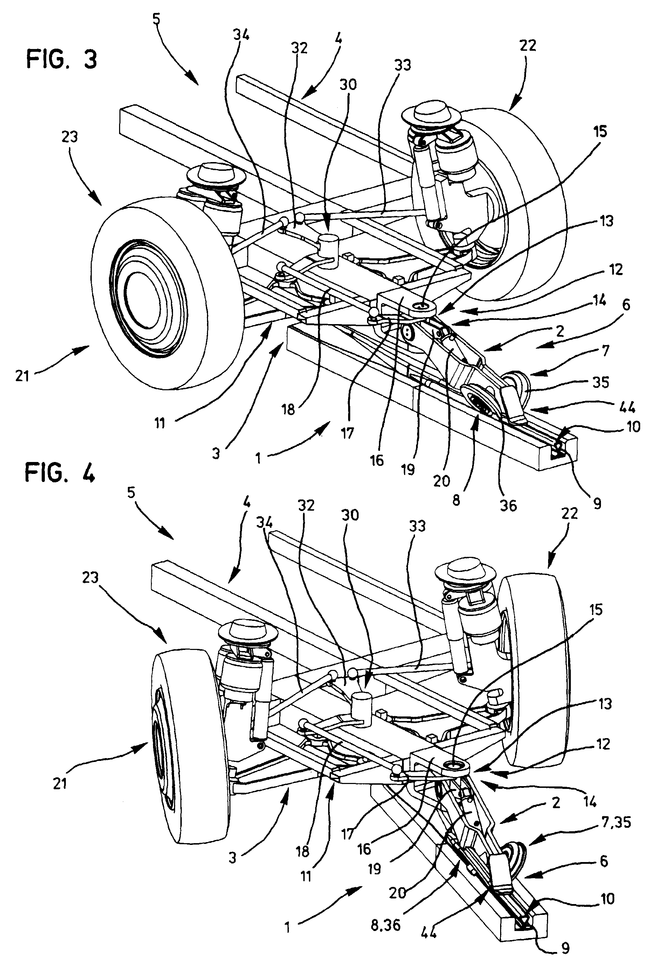

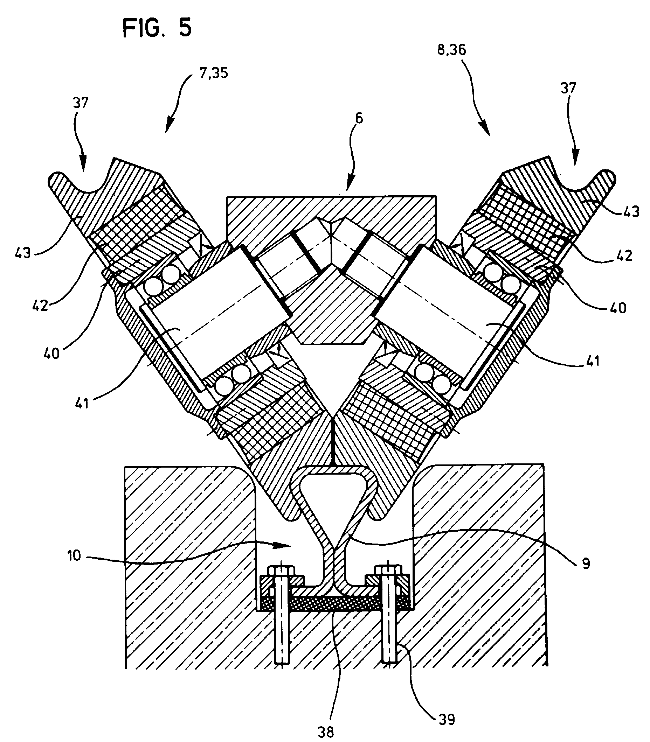

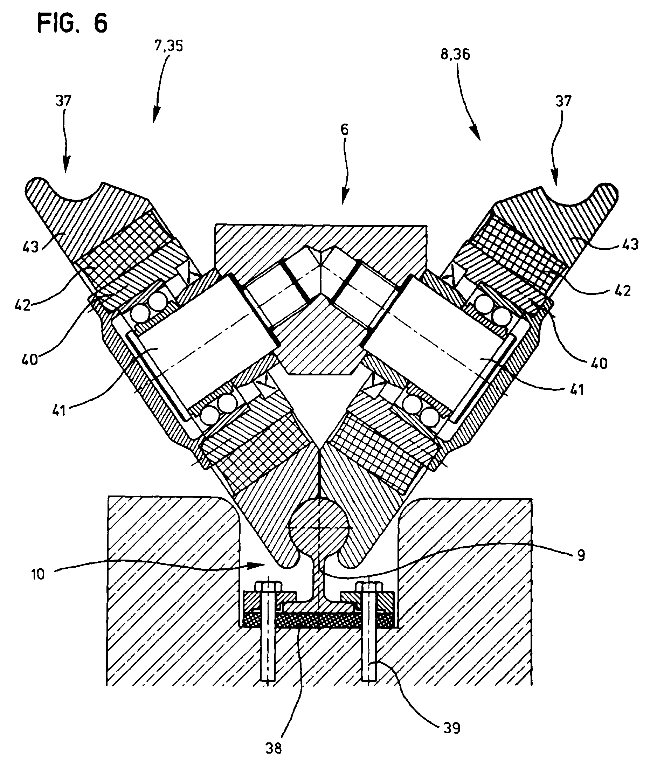

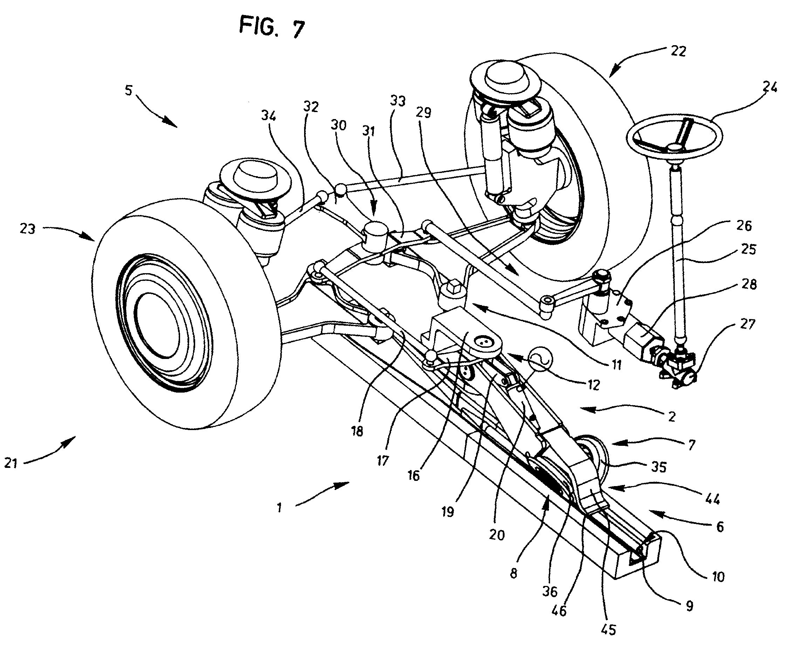

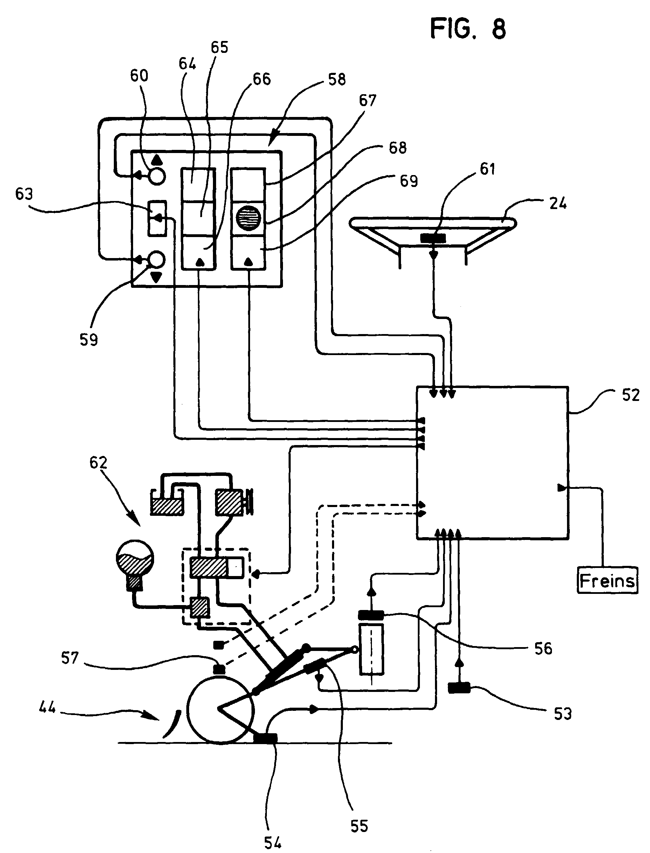

D'autres caractéristiques et avantages de l'invention apparaîtront dans la description qui suit, donnée à titre d'exemple et accompagnée des dessins qui représentent :
. la figure 1 : une vue générale en perspective de l'avant d'un ensemble d'autoguidage selon l'invention, en position de fonctionnement le long d'un rail ;
. la figure 2 : une vue générale en perspective de l'arrière de l'ensemble d'autoguidage ;
. la figure 3 : une vue en perspective de l'avant de l'ensemble d'autoguidage associé à un train directeur du véhicule, en position d'avancement rectiligne ;
. la figure 4 : une vue correspondant à la figure 3, en position de virage ;
. la figure 5 : une vue an coupe transversale de l'ensemble d'autoguidage et du rail, an position de fonctionnement ;
. la figure 6 : une vue analogue à la figure 5, dans une variante de conformation du profil transversal ;
. la figure 7 : une vue an perspective schématique illustrant un exemple de réalisation d'une unité de direction complète sur un véhicule urbain ;
. la figure 8 : un schéma fonctionnel général de commande de l'ensemble d'autoguidage.

L'idée générale inventive consiste à réaliser un guidage du véhicule par un ensemble relevable et articulé comportant une tête à deux moyens de roulement enserrant le rail de guidage.

Les figures représentent un ensemble d'autoguidage directionnel 1 selon l'invention.

Il comprend essentiellement un bras de guidage 2 relevable monté articulé sur un élément d'extrémité 3 du châssis 4 d'un véhicule routier 5 dont seuls les éléments importants pour l'invention sont représentés. Ce bras de guidage 2 comporte an extrémité avant une tête de roulement 6 équipée de moyens de roulement 7,8 destinés à suivre une piste, matérialisée de préférence sous la forme d'un rail 9, en saillie, c'est-à-dire rapporté sur la chaussée, ou an fond de gorge ou de caniveau 10 ménagé dans la chaussée.

Plus particulièrement, le bras de guidage 2 est monté articulé à une structure d'extrémité avant 11 du châssis par une articulation 12 du type à la cardan formée d'un pivot de guidage 13 et d'un pivot de basculement 14 à axes croisés autorisant des mouvements de pivotement dans deux plans croisés par exemple vertical et horizontal.

L'axe 15 du pivot de guidage 13 est monté à l'extrémité d'une fourche 16 solidaire du bout de châssis. Le corps du pivot de guidage présente en partie inférieure une extension latérale formant un levier latéral de commande 17 sur lequel est articulée une bielle de renvoi 18, et en partie supérieure une chape 19 sur laquelle est monté articulé par une de ses extrémités un vérin de relevage 20.

Le basculement d'ensemble du bras de guidage s'effectue par l'action du vérin de relevage faisant pivoter le bras autour de l'axe du pivot de basculement.

Ce bras de guidage est destiné à commander le train directeur avant 21 , par exemple, à roues indépendantes 22,23 du véhicule routier par l'intermédiaire de ses variations de positions angulaires. A cet effet, il agit par l'intermédiaire de son levier de commande sur la timonerie de direction.

On distingue clairement sur la figure 7 les différents organes composant l'unité fonctionnelle de direction du véhicule depuis le poste de conduite jusqu'au train avant directeur à roues indépendantes ou à essieu commandé en mode manuel par un volant 24 de direction actionné par le conducteur ou en mode d'autoguidage par le bras de guidage suivant la forme de parcours imposée par le rail de guidage.

Sur cette figure sont représentés les organes classiques du système de direction à savoir le volant 24 monté sur une colonne de direction 25 réglable en hauteur aboutissant à un boîtier d'assistance de direction 26 par l'intermédiaire d'un renvoi d'angle 27 suivi d'une transmission homocinétique 28. La sortie du boîtier de direction 26 est reliée par un ensemble 29 levier-bielle de direction à un pivot central de direction 30. Le pivot de guidage 13 comportant le levier latéral 17 est relié de façon articulée par la bielle de renvoi 18 au pivot central 30. Les liaisons articulées provenant du bras de guidage et du volant sont jumelées mécaniquement de part et d'autre du pivot central 30 par une platine diamétrale 31. Sous l'effet des commandes manuelle ou d'autoguidage, le pivot central 30 actionne simultanément par un secteur 32 une bielle de commande roue gauche 33 et une bielle de commande roue droite 34.

Plus particulièrement, les moyens de roulement avant sont réalisés sous la forme d'un couple de deux galets de guidage 35,36 libres en rotation et disposés cote à cote en contact simultané étroit de roulement avec le rail.

Selon une disposition préférée, ces galets sont montés à rotation libre et inclinés symétriquement par rapport à un plan médian vertical passant par le bras. La disposition en "V" ci-dessus permet de suivre le rail en s'appuyant continûment sur ses épaulements latéraux. Le maintien permanent en cours de roulement évite le déraillement et améliore la stabilité.

A cet effet, les galets sont montés rapprochés pour enserrer le rail. Un léger débattement possible par déformation élastique d'une pièce composante permet de réaliser un véritable contact avec effet de pincement.

Bien entendu, chaque galet présente un profil de gorge 37 complémentaire au demi-profil du rail en tenant compte de son inclinaison.

On distingue à cet effet des profils de rail de forme triangulaire (figures 3 à 5), ronde (figures 1,2,6 et 7) et autre montés en fond de gorge dans le caniveau ou à même le sol par appui de sa semelle sur un intercalaire 38 insonorisant et fixation par tirefonds 39.

La constitution de chacun des galets de guidage peut varier. Elle sera toujours composite, à savoir un moyeu 40, un axe-roulement 41, un élément central coaxial déformable 42 assurant par sa déformation le léger débattement fonctionnel et une couronne métallique 43 de roulement en contact de roulement par sa gorge avec le rail de guidage.

Il convient de noter que le bras de guidage est équipé à son extrémité avant d'un détecteur d'obstacles dit sabot chasse-pierres en forme de déflecteur 44 destiné à dégager les petits obstacles qui pourraient encombrer le passage le long du rail. Ce déflecteur 44 est réalisé par exemple sous la forme d'une plaquette 45 inclinée avec un retour horizontal 46. Selon une variante de réalisation, la plaquette présente une ouverture 47 permettant de se déplacer le long du rail de guidage le plus près possible de celui-ci de manière à mieux évacuer les petits obstacles immobilisés près du rail.

Tous les tronçons de trajet en mode d'autoguidage c'est-à-dire équipés de rails de guidage débutent par une zone d'engagement 48 par exemple du type de celle représentée sur la figure 2. Cette zone d'engagement présente une cavité d'entrée 49 de forme convergente vers une partie centrale 50 se terminant par un embout d'extrémité 51 du rail facilitant la prise de rail par les galets. Le tronçon se termine par une zone d'échappement par exemple du même type.

Dans ces zones d'engagement et d'échappement, le guidage est effectué par les faces extérieures des galets en vue du positionnement du bras dans l'alignement de l'extrémité du rail.

Le fonctionnement d'ensemble est géré par un automate 52 suffisamment élaboré pour prendre certaines décisions de sécurité à la place du conducteur. Le schéma général de fonctionnement de la commande à partir de cet automate est représenté sur la figure 8.

L'ensemble d'autoguidage selon l'invention comprend divers capteurs reliés à l'automate, situés notamment au niveau de l'extrémité avant du bras de guidage, dont un capteur de vitesse 53, un capteur 54 de présence du rail, un capteur 55 de position du bras, un capteur 56 d'effort anormal sur l'articulation du bras, un capteur 57 d'effort anormal sur les galets.

D'autre part, l'automate peut recevoir des instructions directement du conducteur.

Un tableau de visualisation 58 est prévu dans le poste de pilotage. Ce tableau de visualisation pourra comporter par exemple des interrupteurs 59,60 d'abaissement et de relevage du bras de guidage.

D'autre part, dans le cadre du système dit "homme mort", un bouton poussoir 61 pourra être prévu sur le moyeu du volant.

A partir des données transmises par les capteurs et des instructions fournies par le conducteur, l'automate commande le fonctionnement du circuit hydraulique 62 d'actionnement du vérin du bras de guidage, en abaissement ou en relevage et gère les fonctions de sécurité.

L'automate pourra également commander l'actionnement des freins, en cas de vitesse excessive ou dans le cadre du déclenchement de la procédure dite de l'"homme mort".

Le mode et les caractéristiques de fonctionnement sont présentés au conducteur sur le tableau de visualisation par l'intermédiaire de voyants tels que un voyant de guidage 63, des voyants d'alerte 64,65 et 66, et des voyants 67,68 et 69 correspondant au système dit "homme mort".

Le cas échéant, l'automate pourra bien entendu être relié à un système de signalisation de la voie (relation non représentée).

On décrit ci-après le fonctionnement du système de direction/guidage.

En commande manuelle de direction, le véhicule circule hors guidage. Le conducteur actionne le volant de direction qui, par l'intermédiaire de la commande manuelle et de la commande commune de direction, actionne le pivotement des roues du train avant.

Le bras de guidage est alors en position haute rendant l'ensemble d'autoguidage inactif et suit les mouvements imposés par les organes de direction.

Pour des raisons de sécurité, le bras de guidage ne peut pas être abaissé, même de façon volontaire tant que la vitesse du véhicule mesurée par le capteur de vitesse est supérieure à une vitesse de référence, qui est la vitesse maximale autorisée pour la prise du rail de guidage.

Si par mégarde le bras de guidage était abaissé par le conducteur en-dehors d'un site de guidage, par exemple lors d'un arrêt, un système de sécurité fonctionnant par défaut de détection sur le capteur de présence de rail après temporisation, provoquerait le relevage automatique du bras.

Pour le passage en mode guidé, le conducteur engage le véhicule dans une zone de transition marquée par une signalisation horizontale, à une vitesse maximale de consigne.

De petites glissières latérales convergentes aux formes appropriées permettent de parfaire le centrage du véhicule.

Un panneau indique au conducteur qu'il doit actionner la commande en abaissement du bras de guidage.

Le bras de guidage s'abaisse et les deux galets viennent se centrer en face de l'embout du rail en étant guidés par leurs faces extérieures. La forme convergente adaptée de la zone d'engagement aligne progressivement les galets sur l'axe du rail, et à l'entrée de la zone de guidage proprement dite, les faces intérieures des galets s'engagent sur le rail grâce à l'embout spécial et aux moyeux élastiques.

La forme du rail, la position et la forme des galets font que tout déraillage est alors impossible.

Dés que le capteur de présence de rail, par exemple, un patin de carbone disposé derrière les galets, a détecté la présence du rail, le véhicule est considéré comme étant en mode guidage.

Pour parer à toute éventualité, par exemple vitesse d'approche trop élevée, angle d'attaque inadapté, abaissement trop tardif du bras de guidage, une seconde zone d'engagement pourra être prévue à quelque distance de la zone principale.

Dans le cas où le conducteur n'a pas réussi la première prise de rail, une seconde tentative peut être effectuée dans cette zone par une procédure identique.

Lorsqu'il est prévu un système dit "homme mort", le roulage en mode autoguidé s'effectue de façon normale tant que ce système dit "homme mort" ne détecte aucune défaillance dans la conduite.

Si le système dit "homme mort" détecte une défaillance de conduite, l'automate déclenche la procédure d'arrêt programmée.

Une autre sécurité peut être installée sur l'ensemble d'autoguidage. Il s'agit de détecter tout effort anormal sur le bras de guidage, dû par exemple à un rail déformé ou obstrué par un objet ou une pierre.

Dans ce cas, le capteur installé sur l'axe horizontal du bras de guidage détecte un effort anormal. L'automate commande alors la procédure d'échappement.

Un effort important est appliqué par le vérin de relevage sur le bras pour faire échapper les galets par déformation des moyeux élastiques et rétracter l'ensemble d'autoguidage.

Un signal sonore prévient le conducteur qu'il doit immédiatement reprendre la commande de direction et appliquer la procédure prévue.

En sortie de zone de guidage, le véhicule parcourt la zone d'échappement en étant encore guidé, puis, dès que le capteur de présence de rail détecte la fin de celui-ci, l'automate commande la rétraction de l'ensemble d'autoguidage. Le véhicule se retrouve alors en mode manuel non guidé.

## Revendications

1. Ensemble d'autoguidage directionnel le long d'un rail de guidage (9) pour véhicule routier, comportant un bras de guidage (2) monté pivotant autour d'un axe vertical à l'avant et en sous face du véhicule, deux galets (35,36) étant montés libres en rotation à l'extrémité dudit bras, lesdits galets étant disposés côte à côte et inclinés l'un vers l'autre en "V" à pointe dirigée vers le rail et présentant un profil de gorge adapté à la forme de profil des flancs du rail de guidage (9) pour suivre le rail en vue de commander le train avant directeur du véhicule à partir des variations angulaires du bras de guidage (2), caractérisé en ce que :
- le bras de guidage (2) est également monté à pivotement autour d'un axe horizontal transversal au véhicule de façon à pouvoir être relevé pour passer en mode directionnel manuel,
- les galets (35,36) se composent chacun d'un axe-roulement (41), d'un moyeu (40), d'une couronne métallique (43) de roulement et d'un élément central coaxial en matériau déformable (42) permettant d'obtenir, lorsque les galets enserrent le rail, un véritable contact avec effet de pincement, et
- le relevage du bras peut être obtenu par application d'un effort suffisant de relevage sur le bras pour faire s'échapper les galets du rail de guidage par déformation de l'élément central (42) et rétracter ainsi l'ensemble d'autoguidage.

2. Ensemble d'autoguidage selon la revendication 1 caractérisé en ce que le bras de guidage (2) est relié au châssis du véhicule par une articulation à la cardan.

3. Ensemble d'autoguidage selon les revendications 1 ou 2 caractérisé en ce que le profil du rail de guidage (9) est circulaire ou en triangle renversé.

4. Ensemble d'autoguidage selon la revendication 1 caractérisé en ce que l'ensemble d'autoguidage est directement relié après le bottier d'assistance (26) à la timonerie de direction du véhicule par un ensemble articulé (29) à levier et bielle.

5. Ensemble d'autoguidage selon la revendication 1 caractérisé en ce qu'il comprend des capteurs d'effort et de présence.

6. Ensemble d'autoguidage selon les revendications 1 et 5 caractérisé en ce qu'il est piloté par un automate en liaison avec les capteurs d'effort.

7. Ensemble d'autoguidage selon la revendication 1, caractérisé en ce que le bras de guidage (2) comporte à son extrémité avant, en avant des galets, un détecteur d'obstacles.

8. Ensemble d'autoguidage selon la revendication 7 caractérisé en ce que le détecteur d'obstacles est un sabot déflecteur (44) formé d'une plaquette inclinée (45) présentant un retour horizontal (46).

## Claims

1. Unit for automatic directional guiding along a guide rail (9) for a road vehicle, comprising a guide arm (2) mounted to pivot about an upright axis at the front and on the underside of the vehicle, two rollers (35,36) being mounted to rotate freely at the end of the arm, the rollers being arranged side by side and inclined towards one another in a "V" shape with the point directed towards the rail and having a groove profile matched to the profile shape of the flanks of the guide rail (9) to follow the rail with a view to controlling the steering front train of the vehicle on the basis of the angular variations of the guide arm (2), characterised in that:
- the guide arm (2) is also mounted to pivot about a horizontal axis which is transverse to the vehicle so that it can be lifted to pass into manual steering mode,
- the rollers (35,36) are each composed of a running axle (41), a hub (40), a running metal rim (43) and a coaxial central element of deformable material (42) enabling real contact with a pinching effect to be obtained when the rollers grip the rail, and
- the arm can be lifted by applying a sufficient lifting force on the arm to cause the rollers to escape from the guide rail by deformation of the central element (42) and thus the automatic guide unit to be retracted.

2. Automatic guide unit according to claim 1, characterised in that the guide arm (2) is connected to the chassis of the vehicle by a cardan joint.

3. Automatic guide unit according to claim 1 or claim 2, characterised in that the profile of the guide rail (9) is circular or in the form of an inverted triangle.

4. Automatic guide unit according to claim 1, characterised in that the automatic guide unit is connected directly after the power-steering casing (26) to the steering linkage of the vehicle by an articulated unit (29) having a lever and a connecting rod.

5. Automatic guide unit according to claim 1, characterised in that it comprises force and presence sensors.

6. Automatic guide unit according to claims 1 and 5, characterised in that it is operated by an automatic device connected to the force sensors.

7. Automatic guide unit according to claim 1, characterised in that the guide arm (2) comprises, at its front end, in front of the rollers, an obstacle detector.

8. Automatic guide unit according to claim 7, characterised in that the obstacle detector is a deflecting shoe (44) formed from an inclined plate (45) having a horizontal return portion (46).

## Patentansprüche

1. Vorrichtung zur richtungsabhängigen Selbstführung von Straßenfahrzeugen entlang einer Führungsschiene (9) mit einem Führungsarm (2), der um eine vertikale Achse vorne an der Unterseite des Fahrzeugs schwenkbar ist, zwei am Ende des Führungsarms frei drehbaren gelagerten Rollen (35, 36), die einander zugekehrt V-förmig mit einer zur Führungsschiene weisenden Spitze geneigt sind und eine an das Profil der Flanken der Führungsschiene (9) angepaßte Rille bilden, um das vordere richtungsgebende Fahrgestell des Fahrzeugs durch die Winkelausschläge des Führungsarms (2) der Führungsschiene folgend zu steuern:
- der Führungsarm ist zugleich an einer horizontalen Achse quer zum Fahrzeug schwenkbar gelagert derart, dass er für ein manuelles Lenken anhebbar ist,
- die Rollen (35, 36) weisen jeweils eine Rollachse (41), eine Nabe (40), einen metallischen Rollenkranz (43) und ein zentrales, koaxiales Element (42) aus verformbarem Material auf, damit beim Umgreifen der Schiene durch die Rollen ein Kontakt mit Klammerwirkung erreichbar ist,
- das Anheben des Führungsarms ist durch Aufbringen einer ausreichenden Hubkraft am Führungsarm erzielbar, wobei die Rollen durch Verformen des zentralen Elementes (42) von der Führungsschiene freikommen und die Selbstführungsvorrichtung ausgehoben ist.

2. Vorrichtung nach Anspruch 1, dadurch gekennzeichnet, daß der Führungsarm (2) mit dem Chassis des Fahrzeugs über ein Kardangelenk verbunden ist.

3. Vorrichtung nach Anspruch 1 oder 2, dadurch gekennzeichnet, daß das Profil der Führungsschiene (9) kreisförmig ist oder die Form eines auf der Spitze stehenden Dreiecks aufweist.

4. Vorrichtung nach Anspruch 1, dadurch gekennzeichnet, daß sie unmittelbar nach dem Servolenkgehäuse mit dem Lenkgestänge des Fahrzeugs über eine Gelenkeinheit (26) mit einem Lenker und einer Koppel verbunden ist.

5. Vorrichtung nach Anspruch 1, dadurch gekennzeichnet, daß sie Kraft- und Positionsgeber aufweist.

6. Vorrichtung nach einem der Ansprüche 1-5, dadurch gekennzeichnet, daß sie über einen mit den Kraftgebern verbundenen Automat steuerbar ist.

7. Vorrichtung nach Anspruch 1, dadurch gekennzeichnet, daß der Führungsarm (2) an seinem vorderen Ende einen Hindernisdetektor aufweist.

8. Vorrichtung nach Anspruch 7, dadurch gekennzeichnet, daß der Hindernisdetektor einen Abweiserschuh (44) aus einer geneigten Platte (45) mit anschließendem horizontalem Abschnitt (46) aufweist.
